# EUROPEAN PATENT SPECIFICATION

(11) **EP 3 139 220 B1**
(45) Date of publication and mention of the grant of the patent: **09.01.2019**
(21) Application number: 14890840.3
(22) Date of filing: 28.04.2014
(51) Int. Cl.: G04R 20/14, G04G 5/00, H04N 21/438

(54) **DIGITAL-BROADCASTING RECEIVER, TIME CORRECTION METHOD, AND TIME-DIFFERENCE MODIFICATION METHOD**
DIGITALRUNDFUNKEMPFÄNGER, ZEITKORREKTURVERFAHREN UND ZEITUNTERSCHIEDSMODIFIZIERUNGSVERFAHREN
RÉCEPTEUR DE RADIODIFFUSION NUMÉRIQUE, PROCÉDÉ DE CORRECTION DE TEMPS ET PROCÉDÉ DE MODIFICATION DE DIFFÉRENCE DE TEMPS

(43) Date of publication of application: 08.03.2017
(73) Proprietor: Mitsubishi Electric Corporation, Chiyoda-ku Tokyo 100-8310 (JP)
(72) Inventor: YUKAWA, Maki, Tokyo 100-8310 (JP); OKUBO, Tadatoshi, Tokyo 100-8310 (JP); HONDA, Katsuhiko, Tokyo 100-8310 (JP); KUWAHARA, Masato, Tokyo 100-8310 (JP)
(74) Representative: Hoffmann Eitle
(86) International application number: PCT/JP2014/061877
(87) International publication number: WO 2015/166535

(56) References cited:
- JP-A- 2005 091 114
- JP-A- 2006 352 752
- JP-A- 2008 294 865
- JP-A- 2010 252 130

## Description

### FIELD OF THE INVENTION

The present invention relates to a digital broadcasting receiver for, a time correction method of, and a time difference changing method of making a correction to a system time and making a change to a time difference on the basis of the pieces of time information and the pieces of time difference information which are included in digital broadcasts.

### BACKGROUND OF THE INVENTION

For example, a device described in patent reference 1 acquires pieces of time information from broadcast waves which the device has received by scanning channels, and, when there is a difference among the acquired pieces of time information about the broadcast waves, selects pieces of time information matching each other whose number is larger than that of any other pieces of time information matching each other, and adjusts the system time according to the selected pieces of time information.

### RELATED ART DOCUMENT

### PATENT REFERENCE

Patent reference 1: Japanese Unexamined Patent Application Publication No. H11-352252.

JP2008-294865 A describes a digital broadcasting receiver wherein time information extracted by a broadcasting signal processing unit is verified by a time information verifying unit and based on time information having the highest degree of accuracy among a plurality of pieces of time information verified by a time information verifying unit, the time information of the part is corrected.

### SUMMARY OF THE INVENTION

### PROBLEMS TO BE SOLVED BY THE INVENTION

There is a case in which a digital broadcasting receiver which is mounted or carried in a moving obj ect, i.e., a so-called digital broadcasting receiver for movement is moved to a location in a receiving environment in which the digital broadcasting receiver cannot receive a broadcast wave including time information and time difference information, and there is also a case in which such a digital broadcasting receiver is used at a location, such as a vicinity of an international boundary, where plural pieces of time information and plural pieces of time difference information coexist. Further, some broadcasting stations at the movement destination distribute normally neither time information nor time difference information in many cases.

In such a situation as above, there is a case in which the system time information or the time difference information of the digital broadcasting receiver is not correct, and the display start time of an electronic program guide and the times of programs deviate.

In contrast, in accordance with conventional techniques represented by patent reference 1, when plural pieces of time information having a difference are acquired, pieces of time information matching each other whose number is larger than that of any other pieces of time information matching each other are selected and used to adjust the time.

However, determining the pieces of time information whose number is the largest to be a true time by performing scanning only once results in easy acquisition of time information having an error, and it is therefore difficult to make a correct time adjustment.

The present invention is made in order to solve the above-mentioned problems, and it is therefore an object of the present invention to provide a digital broadcasting receiver, a time correction method and a time difference changing method capable of correctly making a correction to the system time or making a change to the time difference.

### MEANS FOR SOLVING THE PROBLEM

According to the present invention, there is provided a digital broadcasting receiver according to independent claims 1 and 5 and a time correction method according to independent claims 7 and 8.

### ADVANTAGES OF THE INVENTION

According to the present invention, the following technical effect and problem is solved: in case that a certain time (difference) information from a particular channel can not be received at a certain moment, the received time (difference) information from that particular channel most recently is taken into account as well and stored and weighted in a majority rule. Therefore, a more accurate time information can be established.

### BRIEF DESCRIPTION OF THE FIGURES

[Fig. 1] Fig. 1 is a block diagram showing the configuration of a digital broadcasting receiver according to Embodiment 1 of the present invention;
[Fig. 2] Fig. 2 is a flow chart showing the operation of the digital broadcasting receiver according to Embodiment 1;
[Fig. 3] Fig. 3 is a diagram showing an example of a correction made to system time information in Embodiment 1; and
[Fig. 4] Fig. 4 is a diagram showing an example of a change made to time difference information in Embodiment 1.

### EMBODIMENTS OF THE INVENTION

Hereafter, in order to explain this invention in greater detail, the preferred embodiments of the present invention will be described with reference to the accompanying drawings. Embodiment 1.

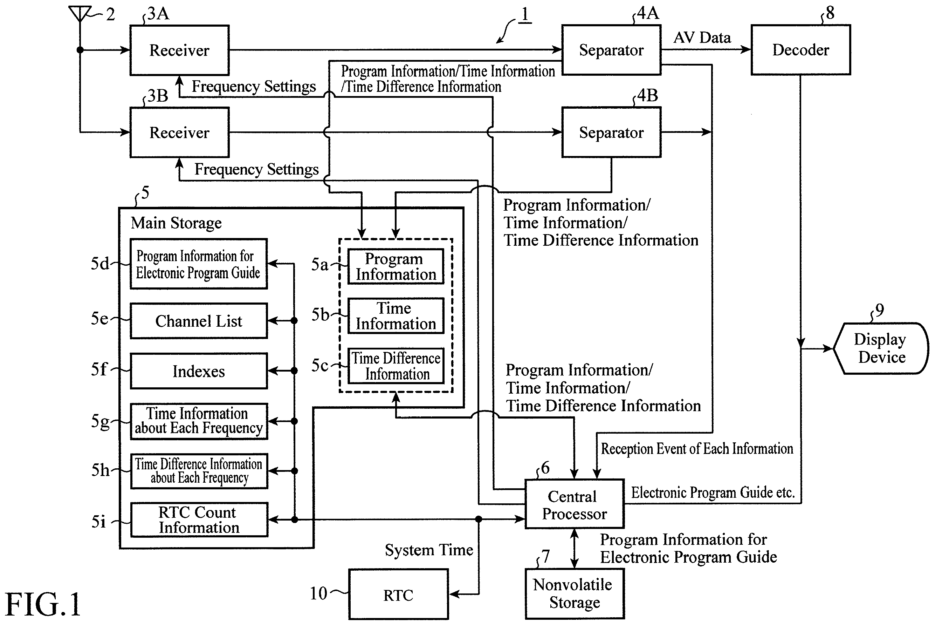

Fig. 1 is a block diagram showing the configuration of a digital broadcasting receiver according to Embodiment 1 of the present invention. Referring to Fig. 1, the digital broadcasting receiver 1 is mounted in, for example, a moving object, such as a vehicle, and includes an antenna 2, receivers 3A and 3B, separators 4A and 4B, a main storage 5, a central processor 6, a nonvolatile storage 7, a decoder 8 and a display device 9.

The receivers 3A and 3B can simultaneously receive broadcast waves having different frequencies from among broadcast waves received via the antenna 2. Further, the receiver 3A is used for reception of the broadcast wave of a program being watched while the receiver 3B is used for reception of information data about an electronic program guide (EPG) .

The receivers 3A and 3B can independently change the frequencies received thereby according to frequency settings from the central processor 6, respectively. For example, the receiver 3B receives a broadcast wave for each of frequencies set by the central processor 6 within a predetermined period of time which is set as an upper limit, in order to receive the information data about the electronic program guide.

The separator 4A separates AV data (currently viewed data) about video and audio, and information data including the program information about the electronic program guide, the time information and the time difference information from the received signal acquired by the receiver 3A. The AV data are converted into a video signal and an audio signal by the decoder 8, and are displayed on the display device 9. The separator 4A stores the information data separated from the received signal in the main storage 5 as information data about the channel currently being viewed. In this way, the program information 5a, the time information 5b and the time difference information 5c are stored in the main storage 5.

Further, after storing the above-mentioned information data in the main storage 5, the separator 4A notifies the central processor 6 that these information data have been received. When notified that the above-mentioned information data have been received, the central processor 6 refers to these information data stored in the main storage 5 to evaluate the information data, thereby updating the corresponding information stored in the main storage 5 and that stored in the nonvolatile storage 7.

The separator 4B separates the information data about the electronic program guide from the received signals acquired by the receiver 3B, stores the information data in the main storage 5 as program information 5a, time information 5b and time difference information 5c, and notifies the central processor 6 that these information data have been received.

When notified that the above-mentioned information data have been received, the central processor 6 refers to these information data stored in the main storage 5 to evaluate the information data, thereby updating the corresponding information stored in the main storage 5 and that stored in the nonvolatile storage 7, like in the case of the separator 4A.

The main storage 5 is a volatile storage from which information can be read at a higher speed than that of the nonvolatile storage 7, but which cannot hold the contents stored therein when the power supply of the digital broadcasting receiver 1 is turned off. The main storage 5 also functions as a storage that stores either the time information or the time difference information about each of the frequencies of the channels.

Further, the information data separated from the received signals of the receiver 3B include program information for electronic program guide 5d. The program information for electronic program guide 5d is used in order to generate the electronic program guide to be displayed on the display device 9.

A channel list 5e holds the frequencies of channels which are to be displayed as the electronic program guide.

Indexes 5f are values respectively showing the positions in the channel list 5e of the channels (the frequencies) received by the receiver 3B.

Time information about each frequency 5g is one in which for each of the frequencies for which received signals are acquired, the time information separated from the received signal is held while being brought into correspondence with the frequency.

Time difference information about each frequency 5h is one in which for each of the frequencies for which received signals are acquired, the time difference information separated from the received signal is held while being brought into correspondence with the frequency.

RTC (Real Time Clock) count information 5i is one that holds an RTC value counted after a system time is determined.

The central processor 6 uses the time information 5b and the time difference information 5c among the information data separated from the received signals of the receiver 3B, to make a correction on the system time and make a change to the time difference by using not only the time information and the time difference information of the channel currently being viewed, but also those included in the broadcasts which can be received at the frequencies of the channels registered in the channel list 5e.

The central processor 6 also repeatedly performs a series of processes of acquiring the pieces of time information about plural frequencies from the received signals in a predetermined channel range and storing the pieces of time information in the main storage 5, and correcting the time on the basis of pieces of time information which are included in the pieces of time information about the frequencies stored in the main storage 5 and match each other, and whose number is larger than that of any other pieces of time information matching each other.

For example, the central processor 6 performs frequency settings based on the values of the channel list 5e and the indexes 5f on the receiver 3B at time intervals, a fixed upper limit being imposed on the length of the time intervals, thereby being able to save the time required to make an error correction to the system time and perform the process of changing the time difference information by using information data which are not guaranteed to be received.

The nonvolatile storage 7 stores the program information for the electronic program guide, and is disposed in order to hold the program information even if the power supply of the digital broadcasting receiver 1 is turned off.

An RTC (Real Time Clock) 10 holds the system time of the digital broadcasting receiver 1 and updates the system time at fixed time intervals. The RTC 10 also provides the central processor 6 with the system time, and the system time is corrected by the central processor 6.

Next, operations will be explained.

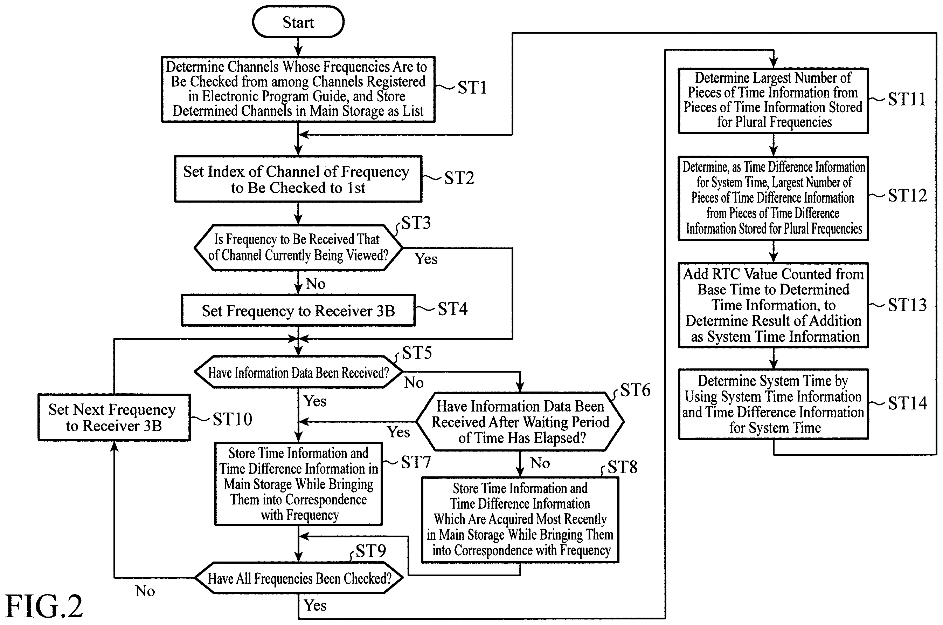

Fig. 2 is a flow chart showing the operation of the digital broadcasting receiver according to Embodiment 1, and shows the series of processes of making a correction to the system time and making a change to the time difference, the series of processes being repeatedly performed by the central processor 6.

The central processor 6 generates an electronic program guide from the program information for electronic program guide 5d, and determines the channels whose frequencies are to be checked from among the channels registered in the electronic program guide. The central processor then stores the channel list 5e in which the determined channels are registered in the main storage 5.

The processes which are performed until now correspond to step ST1.

The central processor 6 then sets the index 5f of the channel, in the channel list 5e, whose frequency is to be checked to the first (step ST2).

When the frequency of the channel whose index 5f is the first has been received by the receiver 3A, but is not that of the channel currently being viewed (when No in step ST3), the central processor 6 sets the frequency of the channel whose index 5f is the first to the receiver 3B (step ST4).

In contrast, when the frequency of the channel whose index 5f is the first has been received by the receiver 3A, and is that of the channel currently being viewed (when Yes in step ST3), the central processor makes a transition to a process of step ST5.

The central processor 6, in step ST5, determines whether or not information data have been received, on the basis of a notification from the separator 4A or the separator 4B.

When no information data have been received (when No in step ST5), the central processor 6 determines whether or not information data have been received after a predetermined waiting period of time has elapsed, on the basis of a notification from the separator 4A or the separator 4B (step ST6). When then determining that information data have been received (when Yes in step ST6), the central processor makes a transition to a process of step ST7.

The central processor 6 extracts the time information and the time difference information from the received information data, and stores the time information and the time difference information in the main storage 5 as time information about each frequency 5g and time difference information about each frequency 5h while bringing them into correspondence with the frequency of the broadcast including this information data (step ST7).

In contrast, when no information data have been received even after the waiting period of time has elapsed (when No in step ST6), the central processor 6 stores the time information and the time difference information which are acquired most recently for the channel in the main storage 5 as time information about each frequency 5g and time difference information about each frequency 5h while bringing them into correspondence with the frequency of the channel (step ST8).

After that, the central processor 6 checks whether it has checked all the channels (the frequencies) in the channel list 5e for the receiver 3B (step ST9).

When not having checked all the channels (the frequencies) (when No in step ST9), the central processor 6 sets the next channel (the next frequency) in the channel list 5e to the receiver 3B (step ST10), and repeats the processing from step ST5.

When the receiver 3A is receiving the channel currently being viewed or when all the channels (the frequencies) have been checked (when Yes in step ST9), the central processor 6 refers to the pieces of time information about each frequency 5g which are stored in the main storage 5, to determine the pieces of time information whose number is the largest (step ST11).

Next, the central processor 6 refers to the pieces of time difference information about each frequency 5h which are stored in the main storage 5, to determine the pieces of time information whose number is the largest as the time difference information for the system time (step ST12).

Next, the central processor 6 adds the RTC value counted from a base time to the time information determined in step ST11, to generate system time information (step ST13).

After that, the central processor 6 determines the system time of the digital broadcasting receiver 1 by using the system time information generated in step ST13 and the time difference information determined in step ST12 (step ST14).

When completing the process of step ST14, the central processor returns to the process of step ST2 and repeatedly performs the above-mentioned series of processes. More specifically, the central processor 6 repeatedly performs the series of processes of acquiring the pieces of time information and the pieces of time difference information about frequencies from the received signals in the predetermined channel range and storing the pieces of time information and the pieces of time difference information in the main storage 5, and making a correction to the time and making a change to the time difference on the basis of both pieces of time information which are included in the pieces of time information about the frequencies stored in the main storage 5 and match each other, and whose number is larger than that of any other pieces of time information matching each other, and pieces of time difference information which are included in the pieces of time difference information about the frequencies stored in the main storage 5 and match each other, and whose number is larger than that of any other pieces of time difference information matching each other. As a result, even if either time information or time difference information having an error is received in either one of the above-mentioned series of processes, the central processor can absorb the error by repeatedly performing the series of processes and correctly make a correction to the system time and make a change to the time difference.

Although in the above-mentioned explanation the case of receiving both time information and time difference information, and making a correction to the system time and making a change to the time difference is shown, these correction and change can be made independently.

For example, information data include TOT (Time Offset Table) information and TDT (Time and Date Table) information, and time information and time difference information are included in TOT information, but time difference information is not included in TDT information.

Therefore, the digital broadcasting receiver according to the present invention can be configured in such a way as to only make a correction to the system time by performing the above-mentioned processes using time information, or can be configured in such a way as to only make a change to the time difference for the system time by performing the above-mentioned processes using time difference information.

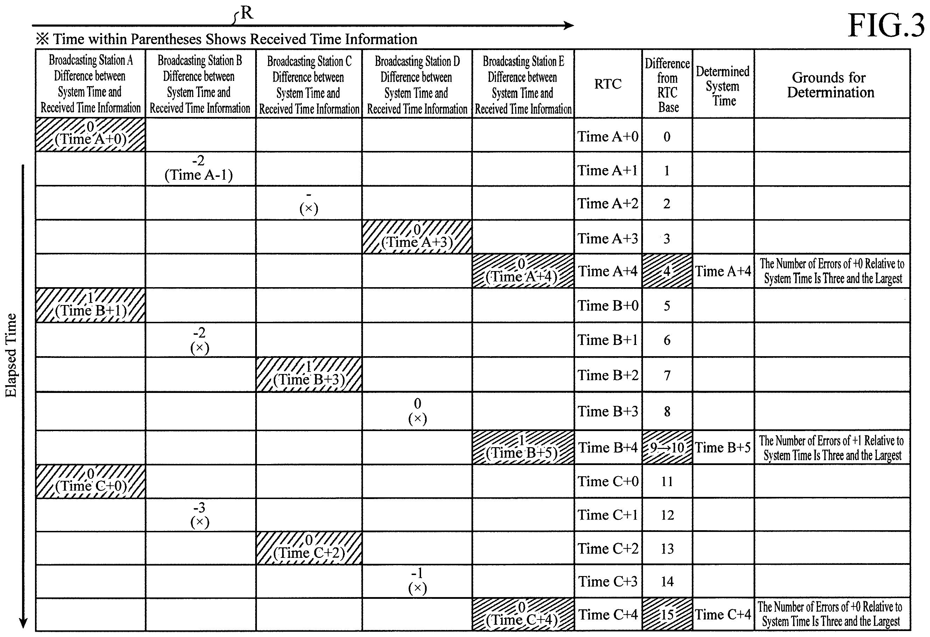

Fig. 3 is a diagram showing an example of the correction made to the system time information in Embodiment 1.

In the example of Fig. 3, the time information about the broadcasting station A continues to be received by the receiver 3A.

Further, each of the frequencies of the broadcasting stations B to E registered in the electronic program guide is set to the receiver 3B, as shown by an arrow R, and the receiver 3B receives the time information at each of the frequencies.

Therefore, the reception times of the pieces of time information respectively received from the broadcasting stations B to E differ from one another. These errors correspond to the time differences which are the results of the subtractions of the pieces of time information received from the broadcasting stations from the base time of the RTC, respectively.

Further, in the example of Fig. 3, "RTC" denotes the time which is calculated by adding the RTC count.

"The difference from the RTC base" corresponds to the value counted from the base time 0.

It is assumed that one count is one second, and each of the receivers performs a process of receiving the time defined in the time information (TOT) included in the received broadcasting wave from each broadcasting station at time intervals of one second.

First, at RTC = a time A+0, the time information included in the broadcast from the broadcasting station A does not have an error (has an error of 0), and shows the time A+0. The time information included in the broadcast from the broadcasting station B has an error of a two-second delay (an error of -2), and shows a time A-1. Further, a mark × shows that no time information is received within the fixed waiting period of time. More specifically, no time information is received from the broadcasting station C, and no time information about the broadcasting station C is included in candidates for time determination.

In addition, the pieces of time information included in the broadcasts from the broadcasting stations D and E do not have an error (have an error of 0), and show a time A+3 and a time A+4, respectively.

Therefore, the time A having an error of 0 corresponds to the pieces of time information whose number is the largest among those of any other pieces of time information included in the pieces of time information about the plural frequencies which are acquired from the broadcasts from the broadcasting stations A to E.

Therefore, the time which is most frequently determined to have an error of 0 between itself and the RTC when the series of processes of receiving the pieces of time information from the broadcasting stations is completed (at the time that the time information from the broadcasting station E is acquired) is determined to be a true time, and is then determined as the system time.

At a time B, the time information included in the broadcast from the broadcasting station A has an error of a one-second advance (an error of +1), and shows a time B+1. The pieces of time information included in the broadcasts from the broadcasting stations C and E show a time B+3 having an error of +1 and a time B+5 having an error of +1, respectively.

In contrast, because no time information has been received from the broadcasting station B even if the above-mentioned waiting period of time has elapsed, the time information having an error of -2 relative to the system time, which was acquired most recently (at the time A) for the broadcasting station B, is read. Because the system time was A+1 when the above-mentioned time information was acquired, the time A-1 is determined by adding the error of -2 to this system time.

Then, the time (approximately a time B-1) which is the result of the addition of the time A-1 and the difference of +5 from the RTC base is assumed to be the time information which is acquired from the broadcast wave of the broadcasting station B this time, and is stored into time information about each frequency 5g.

Further, because no time information is received from the broadcasting station D, either, the time information having an error of 0 relative to the system time, which was acquired most recently (at the time A+3) for the broadcasting station D, is read.

Because the system time was A+3 when the above-mentioned time information was acquired, the time A+3 is determined by adding the error of 0 to this system time. Then, the time which is the result of the addition of this time A+3 and the difference of +5 from the RTC base is assumed to be the time information (the time B+3) which is acquired from the broadcast wave of the broadcasting station D this time, and is stored into time information about each frequency 5g.

Therefore, the time B+1 having an error of +1 corresponds to the largest number of pieces of time information included in the pieces of time information about the plural frequencies which are acquired from the broadcasts from the broadcasting stations A to E.

Therefore, the time which is most frequently determined to have an error of 0 between itself and the RTC when the series of processes of receiving the pieces of time information from the broadcasting stations is completed (at the time that the time information from the broadcasting station E is acquired) is determined to be a true time, and is then determined as the system time.

Although the difference from the RTC base is +9 at the time that the time information from the broadcasting station E is acquired, by adding +1 to this difference, the difference is corrected to +10 since the time having an error of +1 is selected.

Therefore, the time B+5 which is the result of the addition of the error of +1 to the RTC at the time that the time information from the broadcasting station E is acquired is determined as the system time.

At a time C, the time information included in the broadcast from the broadcasting station A does not have an error (has an error of 0), and shows the time C+0. The pieces of time information included in the broadcasts from the broadcasting stations C and E do not have an error of 0, either, and show a time C+2 and a time C+4, respectively.

In contrast, because no time information has been received from the broadcasting station B even if the above-mentioned waiting period of time has elapsed, the time information having an error of -2 relative to the system time, which was acquired most recently (at the time A-1) for the broadcasting station B, is read. Further, because the time having an error of +1 is selected as the true time at the time B+4, the time information having an error of -3 relative to the system time, this error being the result of the subtraction of +1 from an error of -2, is determined as a candidate under majority rule.

Because the time information in which the above-mentioned time information is stored is the time B-1, the time (approximately a time C-2) which is the result of the addition of 5, which is the result of the subtraction of 1 for the correction at the time B+4 from the difference +6 from the RTC base, is assumed to be the time information acquired from the broadcast wave of the broadcasting station B, and is stored into time information about each frequency 5g.

Further, because no time information is received from the broadcasting station D, either, the time having an error of 0 relative to the system time, which is the time information acquired most recently (at the time A+3) for the broadcasting station D, is read.

The system time that the above-mentioned time information was acquired is B+3. Then, the time (approximately the time C+2) which is the result of the addition of this time B+3 and 5, which is the result of the subtraction of 1 for the correction at the time B+4 from the difference +6 from the RTC base, is stored, as the time information acquired from the broadcast wave of the broadcasting station D, into time information about each frequency 5g.

Therefore, the error of 0 is the most frequently occurring one, the plural pieces of time information having the error of 0 being included in the pieces of time information about the plural frequencies which are acquired from the broadcasts from the broadcasting stations A to E.

Therefore, the time which is the result of the addition of the error of 0, which has occurred most frequently at the time that the series of processes of receiving the pieces of time information from the broadcasting stations is completed (at the time that the time information from the broadcasting station E is acquired), to the time C+4 is determined to be a true time.

Therefore, the time C+4 which is the result of the addition of +4 which is the RTC count (the difference from the RTC base) to the time C is determined as the system time.

Thus, when there is a channel for which no time information is acquired while the series of processes of correcting time information is repeatedly performed, the time information which was acquired most recently for this channel is added to the candidates under majority rule. At this time, time information in which the last time correction is reflected in the time information acquired most recently is determined as a candidate under majority rule. Because the digital broadcasting receiver can increase the number of candidates under majority rule by doing in this way, the digital broadcasting receiver can absorb errors and correctly make a correction to the system time.

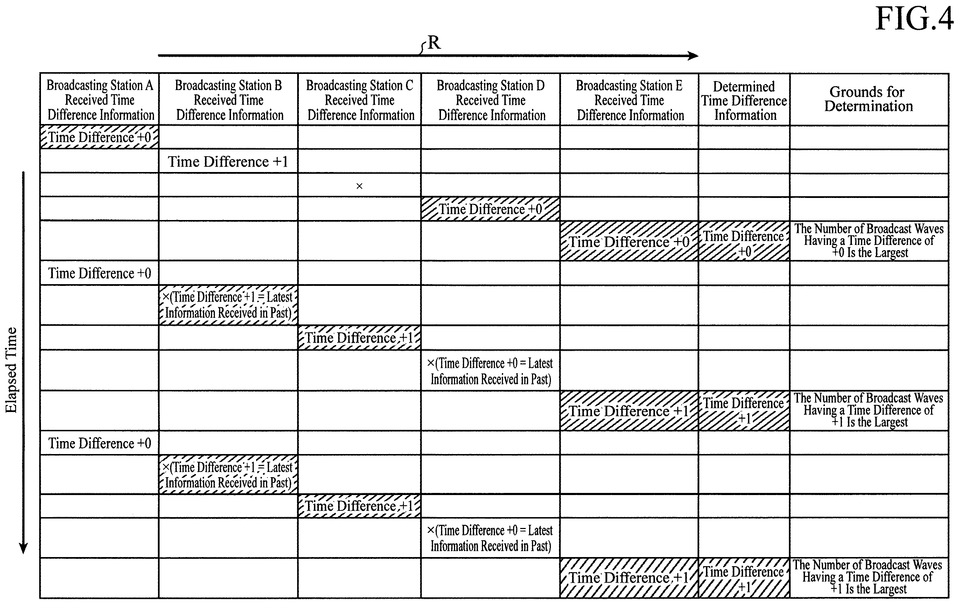

Fig. 4 is a diagram showing an example of the change made to the time difference information in Embodiment 1. In the example of Fig. 4, the time difference information about the broadcasting station A continues to be received by the receiver 3A.

Further, each of the frequencies of the broadcasting stations B to E registered in the electronic program guide is set to the receiver 3B, as shown by an arrow R, and the receiver 3B receives the time difference information at each of the frequencies.

It is assumed that first, time differences of +0 are acquired from the pieces of time difference information included in the broadcasts from the broadcasting stations A, D and E, and a time difference of +1 is acquired from the time difference information included in the broadcast from the broadcasting station B.

A mark × shows that no time difference information is received within a fixed waiting period of time.

More specifically, no time difference information is received from the broadcasting station C.

Therefore, the time difference of +0 corresponds to the pieces of time difference information whose number is the largest among those of any other pieces of time difference information included in the pieces of time difference information about the plural frequencies which are acquired from the broadcasts from the broadcasting stations A to E. Then, the time difference of +0, which has been received most frequently at the time that the series of processes is completed (at the time that the time difference information from the broadcasting station E is acquired), is determined to be the time difference for the system time.

It is assumed that a time difference of +0 is then acquired from the time difference information included in the broadcast from the broadcasting station A, and time differences of +1 are acquired from the pieces of time difference information included in the broadcasts from the broadcasting stations C and E.

Because no time difference information has been acquired from the broadcasting station B even if the above-mentioned waiting period of time has elapsed, the time difference of +1 which is the time difference information acquired most recently is determined to be a candidate under majority rule.

Further, because no time difference information is acquired from the broadcasting station D, either, the time difference of +0 which is the time difference information acquired most recently is determined similarly to be a candidate under majority rule.

Therefore, the time difference of +1 corresponds to the pieces of time difference information whose number is the largest among those of any other pieces of time difference information included in the pieces of time difference information about the plural frequencies which are acquired from the broadcasts from the broadcasting stations A to E. Then, the time difference of +1, which has been received most frequently at the time that the series of processes is completed (at the time that the time difference information from the broadcasting station E is acquired), is determined to be the time difference for the system time.

It is assumed that a time difference of +0 is then acquired from the time difference information included in the broadcast from the broadcasting station A, and time differences of +1 are acquired from the pieces of time difference information included in the broadcasts from the broadcasting stations C and E.

Because no time difference information is acquired from the broadcasting station B, like in the above-mentioned case, the time difference of +1 which is the time difference information acquired most recently is determined to be a candidate under majority rule.

Further, because no time difference information is acquired from the broadcasting station D, either, the time difference of +0 which is the time difference information acquired most recently is determined similarly to be a candidate under majority rule.

Therefore, the time difference of +1 corresponds to the pieces of time difference information whose number is the largest among those of any other pieces of time difference information included in the pieces of time difference information about the plural frequencies which are acquired from the broadcasts from the broadcasting stations A to E. Then, the time difference of +1, which has been received most frequently at the time that the series of processes is completed (at the time that the time difference information from the broadcasting station E is acquired), is determined to be the time difference for the system time.

Thus, when there is a channel for which no time difference information is acquired while the series of processes of changing time difference information is repeatedly performed, the time difference information which was acquired most recently for this channel is added to the candidates under majority rule. Because the digital broadcasting receiver can increase the number of candidates under majority rule by doing in this way, the digital broadcasting receiver can absorb errors and correctly make a change to the time difference for the system time.

As mentioned above, the digital broadcasting receiver according to this Embodiment 1 includes: the receivers 3A and 3B that receive digital broadcasts; the separator 4B that separates either pieces of time information or pieces of time difference information from received signals of the receiver 3B; the main storage 5 that stores either the pieces of time information or the pieces of time difference information about the plural frequencies of channels; and the central processor 6 that repeatedly performs the series of processes of acquiring pieces of either time information or time difference information about plural frequencies from received signals in a predetermined channel range and storing the pieces of either time information or time difference information in the main storage 5, and either correcting the time or changing the time difference on the basis of pieces of either time information or time difference information which are included in the pieces of either time information or time difference information about the plural frequencies stored in the main storage 5 and match each other, and whose number is larger than that of any other pieces of either time information or time difference information matching each other.

Because the digital broadcasting receiver is configured in this way, even if either time information or time difference information having an error is received in either one of the above-mentioned series of processes, the digital broadcasting receiver can absorb the error by repeatedly performing the series of processes, and correctly make a correction to the system time or make a change to the time difference. As a result, the digital broadcasting receiver can correctly make a correction to the system time or make a change to the time difference.

Further, according to this Embodiment 1, the central processor 6 acquires the pieces of either time information or time difference information about plural frequencies from the received signals in a range of channels registered in the electronic program guide.

Because the digital broadcasting receiver is configured in this way, the digital broadcasting receiver sets the predetermined range of channels registered in the electronic program guide as the scanning target, and therefore can speedily make a correction to the system time or make a change to the time difference.

In addition, according to this Embodiment 1, when in the series of processes, there is a channel for which no received signal is received, the central processor 6 adds either the time information or the time difference information acquired most recently for this channel to the candidates under majority rule. Because the digital broadcasting receiver is configured in this way, the digital broadcasting receiver can increase the number of candidates under majority rule, and therefore can absorb errors and correctly make a correction to the system time or make a change to the time difference.

### INDUSTRIAL APPLICABILITY

Because the digital broadcasting receiver according to the present invention can correctly make a correction to the system time and make a change to the time difference, the digital broadcasting receiver is suitable for use as, for example, a digital broadcasting receiver mounted in a vehicle and located in a receiving environment which varies in accordance with movements of the vehicle.

### EXPLANATIONS OF REFERENCE NUMERALS

1 digital broadcasting receiver, 2 antenna, 3A, 3B receiver, 4A, 4B separator, 5 main storage, 5a program information, 5b time information, 5c time difference information, 5d program information for electronic program guide, 5e channel list, 5f index, 5g time information about each frequency, 5h time difference information about each frequency, 5i RTC count information, 6 central processor, 7 nonvolatile storage, 8 decoder, 9 display device, and 10 RTC.

## Claims

1. A digital broadcasting receiver comprising:
a receiver to receive digital broadcasts;
a separator to separate pieces of time information from received signals of said receiver;
a storage to store pieces of time information about plural frequencies of channels; and
a central processor to repeatedly perform a series of processes of acquiring pieces of time information about plural frequencies from received signals in a predetermined channel range, and storing the pieces of time information in said storage, and correcting a time on a basis of pieces of time information which are included in the pieces of time information about the plural frequencies stored in said storage and match each other, and whose number is larger than that of any other pieces of time information matching each other,
**characterised in that**
when in said series of processes, there is a channel for which no received signal is received, said central processor adds time information in which a last time correction is reflected in time information acquired most recently for said channel to candidates under majority rule.

2. The digital broadcasting receiver according to claim 1, wherein said central processor acquires pieces of time information about plural frequencies from received signals in a range of channels registered in an electronic program guide.

3. The digital broadcasting receiver according to claim 1, wherein said central processor performs a series of processes of acquiring pieces of time difference information about plural frequencies from the received signals in said predetermined channel range and storing the pieces of time difference information in said storage, and correcting a time difference on a basis of pieces of time difference information which are included in the pieces of time difference information about the plural frequencies stored in said storage and match each other, and whose number is larger than that of any other pieces of time difference information matching each other.

4. The digital broadcasting receiver according to claim 3, wherein when in said series of processes, there is a channel for which no received signal is received, said central processor adds time difference information acquired most recently for said channel to candidates under majority rule.

5. A digital broadcasting receiver comprising:
a receiver to receive digital broadcasts;
a separator to separate pieces of time difference information from received signals of said receiver;
a storage to store pieces of time difference information about plural frequencies of channels received by said receiver; and
a central processor to repeatedly perform a series of processes of acquiring pieces of time difference information about plural frequencies from received signals in a predetermined channel range and storing the pieces of time difference information in said storage, and correcting a time difference on a basis of pieces of time difference information which are included in the pieces of time difference information about the plural frequencies stored in said storage and match each other, and whose number is larger than that of any other pieces of time difference information matching each other,
**characterised in that**
when in said series of processes, there is a channel for which no received signal is received, said central processor adds time difference information acquired most recently for said channel to candidates under majority rule.

6. The digital broadcasting receiver according to claim 5, wherein said central processor acquires pieces of time difference information about plural frequencies from received signals in a range of channels registered in an electronic program guide.

7. A time correction method comprising the steps of:
in a receiver, receiving digital broadcasts;
in a separator, separating pieces of time information from received signals of said receiver;
in a storage, storing pieces of time information about plural frequencies of channels; and
in a central processor, repeatedly performing a series of processes of acquiring pieces of time information about plural frequencies from received signals in a predetermined channel range and storing the pieces of time information in said storage, and correcting a time on a basis of pieces of time information which are included in the pieces of time information about the plural frequencies stored in said storage and match each other, and whose number is larger than that of any other pieces of time information matching each other,
**characterised in that**
when in said series of processes, there is a channel for which no received signal is received, said central processor adds time information in which a last time correction is reflected in time information acquired most recently for said channel to candidates under majority rule.

8. A time difference correction method comprising the steps of:
in a receiver, receiving digital broadcasts;
in a separator, separating pieces of time difference information from received signals of said receiver;
in a storage, storing pieces of time difference information about plural frequencies of channels; and
in a central processor, repeatedly performing a series of processes of acquiring pieces of time difference information about plural frequencies from received signals in a predetermined channel range and storing the pieces of time difference information in said storage, and correcting a time difference on a basis of pieces of time difference information which are included in the pieces of time difference information about the plural frequencies stored in said storage and match each other, and whose number is larger than that of any other pieces of time difference information matching each other,
**characterised in that**
when in said series of processes, there is a channel for which no received signal is received, said central processor adds time difference information acquired most recently for said channel to candidates under majority rule.

## Patentansprüche

1. Ein digitaler Rundfunkempfänger umfassend:
einen Empfänger zum Empfangen von digitalem Rundfunk;
einen Separator zum Trennen von Stücken von Zeitinformationen von empfangenen Signalen des Empfängers;
einen Speicher zum Speichern von Stücken von Zeitinformationen über mehrere Frequenzen von Kanälen; und
einen Zentralprozessor zum wiederholten Durchführen einer Reihe von Prozessen zum Erfassen von Stücken von Zeitinformationen über mehrere Frequenzen von empfangenen Signalen in einem vorbestimmten Kanalbereich, und Speichern der Stücke von Zeitinformationen in dem Speicher, und Korrigieren einer Zeit basierend auf Stücken von Zeitinformationen, die in den in dem Speicher gespeicherten Stücken von Zeitinformationen über die mehreren Frequenzen beinhaltet sind und zusammen passen, und deren Anzahl größer ist als die der anderen Stücke von Zeitinformationen, die zusammen passen,
**dadurch gekennzeichnet, dass**
wenn in der Reihe von Prozessen ein Kanal ist, für den kein empfangenes Signal empfangen wird, der Zentralprozessor Zeitinformationen zu Kandidaten nach dem Mehrheitsprinzip hinzufügt, in denen eine letzte Zeitkorrektur in zuletzt für den Kanal erfassten Zeitinformationen widergespiegelt wird.

2. Der digitale Rundfunkempfänger gemäß Anspruch 1, wobei der Zentralprozessor Stücke von Zeitinformationen über mehrere Frequenzen von empfangenen Signalen in einem Bereich von Kanälen erfasst, die in einer elektronischen Programmübersicht registriert sind.

3. Der digitale Rundfunkempfänger gemäß Anspruch 1, wobei der Zentralprozessor eine Reihe von Prozessen durchführt zum Erfassen von Stücken von Zeitdifferenzinformationen über mehrere Frequenzen von den empfangenen Signalen in dem vorbestimmten Kanalbereich und Speichern der Stücke von Zeitdifferenzinformationen in dem Speicher, und Korrigieren einer Zeitdifferenz basierend auf Stücken von Zeitdifferenzinformationen, die in den in dem Speicher gespeicherten Stücken von Zeitdifferenzinformationen über die mehreren Frequenzen beinhaltet sind und zusammen passen, und deren Anzahl größer ist als die von anderen Stücken von Zeitdifferenzinformationen, die zusammen passen.

4. Der digitale Rundfunkempfänger gemäß Anspruch 3, wobei, wenn in der Reihe von Prozessen ein Kanal ist, für den kein empfangenes Signal empfangen wird, der Zentralprozessor zuletzt für den Kanal erfasste Zeitdifferenzinformationen zu Kandidaten nach dem Mehrheitsprinzip hinzufügt.

5. Ein digitaler Rundfunkempfänger umfassend:
einen Empfänger zum Empfangen von digitalem Rundfunk;
einen Separator zum Trennen von Stücken von Zeitdifferenzinformationen von empfangenen Signalen des Empfängers;
einen Speicher zum Speichern von Stücken von Zeitdifferenzinformationen über mehrere Frequenzen von Kanälen, die durch den Empfänger empfangen werden; und
einen Zentralprozessor zum wiederholten Durchführen von einer Reihe von Prozessen zum Erfassen von Stücken von Zeitdifferenzinformationen über mehrere Frequenzen von empfangenen Signalen in einem vorbestimmten Kanalbereich, und Speichern der Stücke von Zeitdifferenzinformationen in dem Speicher, und Korrigieren einer Zeitdifferenz basierend auf Stücken von Zeitdifferenzinformationen, die in den in dem Speicher gespeicherten Stücken von Zeitdifferenzinformationen über die mehreren Frequenzen beinhaltet sind und zusammen passen, und deren Anzahl größer ist als die der anderen Stücke von Zeitdifferenzinformationen, die zusammen passen,
**dadurch gekennzeichnet, dass**
wenn in der Reihe von Prozessen ein Kanal ist, für den kein empfangenes Signal empfangen wird, der Zentralprozessor zuletzt für den Kanal erfasste Zeitdifferenzinformationen zu Kandidaten nach dem Mehrheitsprinzip hinzufügt.

6. Der digitale Rundfunkempfänger gemäß Anspruch 5, wobei der Zentralprozessor Stücke von Zeitdifferenzinformationen über mehrere Frequenzen von empfangenen Signalen in einem Bereich von Kanälen erfasst, die in einer elektronischen Programmübersicht registriert sind.

7. Ein Zeitkorrekturverfahren, das die Schritte umfasst zum:
in einem Empfänger, Empfangen von digitalem Rundfunk;
in einem Separator, Trennen von Stücken von Zeitinformationen von empfangenen Signalen des Empfängers;
in einem Speicher, Speichern von Stücken von Zeitinformationen über mehrere Frequenzen von Kanälen; und
in einem Zentralprozessor, wiederholtes Durchführen von einer Reihe von Prozessen zum Erfassen von Stücken von Zeitinformationen über mehrere Frequenzen von empfangenen Signalen in einem vorbestimmten Kanalbereich und Speichern der Stücke von Zeitinformationen in dem Speicher, und Korrigieren einer Zeit basierend auf Stücken von Zeitinformationen, die in den in dem Speicher gespeicherten Stücken von Zeitinformationen über die mehrere Frequenzen beinhaltet sind und zusammen passen, und deren Anzahl größer ist als die der anderen Stücke von Zeitinformationen, die zusammen passen,
**dadurch gekennzeichnet, dass**
wenn in der Reihe von Prozessen ein Kanal ist, für den kein empfangenes Signal empfangen wird, der Zentralprozessor Zeitinformationen zu Kandidaten nach dem Mehrheitsprinzip hinzufügt, in denen eine letzte Zeitkorrektur in zuletzt für den Kanal erfassten Zeitinformationen widergespiegelt wird.

8. Ein Zeitdifferenzkorrekturverfahren, das die Schritte umfasst zum:
in einem Empfänger, Empfangen von digitalem Rundfunk;
in einem Separator, Trennen von Stücken von Zeitdifferenzinformationen von empfangenen Signalen des Empfängers;
in einem Speicher, Speichern von Stücken von Zeitdifferenzinformationen über mehrere Frequenzen von Kanälen; und
in einem Zentralprozessor, wiederholtes Durchführen von einer Reihe von Prozessen zum Erfassen von Stücken von Zeitdifferenzinformationen über mehrere Frequenzen von empfangenen Signalen in einem vorbestimmten Kanalbereich, und Speichern der Stücke von Zeitdifferenzinformationen in dem Speicher, und Korrigieren einer Zeitdifferenz basierend auf Stücken von Zeitdifferenzinformationen, die in den in dem Speicher gespeicherten Stücken von Zeitdifferenzinformationen über die mehreren Frequenzen beinhaltet sind und zusammen passen, und deren Anzahl größer ist als die der anderen Stücke von Zeitdifferenzinformationen, die zusammen passen,
**dadurch gekennzeichnet, dass**
wenn in der Reihe von Prozessen ein Kanal ist, für den kein empfangenes Signal empfangen wird, der Zentralprozessor zuletzt für den Kanal erfasste Zeitdifferenzinformationen zu Kandidaten nach dem Mehrheitsprinzip hinzufügt.

## Revendications

1. Récepteur de diffusion numérique comprenant :
un récepteur pour recevoir des diffusions numériques ;
un séparateur pour séparer des pièces d'informations temporelles à partir de signaux reçus dudit récepteur ;
une mémoire pour stocker des pièces d'informations temporelles sur de multiples fréquences de canaux ; et
un processeur central pour effectuer de manière répétée une série de processus d'acquisition de pièces d'informations temporelles sur de multiples fréquences à partir de signaux reçus dans une plage de canaux prédéterminée et stocker des pièces d'informations temporelles dans ladite mémoire, et corriger un temps sur la base de pièces d'informations temporelles qui sont incluses dans les pièces d'informations temporelles sur les multiples fréquences stockées dans ladite mémoire et s'apparient mutuellement, et dont le nombre est plus grand que celui d'autres pièces quelconques d'informations temporelles s'appariant mutuellement,
**caractérisé en ce que**,
lorsque dans ladite série de processus, il y a un canal pour lequel aucun signal reçu n'est reçu, ledit processeur central ajoute des informations temporelles dans lesquelles une correction de dernier moment est reflétée dans les informations temporelles acquises le plus récemment pour ledit canal à des candidats selon la règle de la majorité.

2. Récepteur de diffusion numérique selon la revendication 1, dans lequel ledit processeur central acquiert des pièces d'informations temporelles sur de multiples fréquences à partir de signaux reçus dans une plage de canaux enregistrés dans un guide de programme électronique.

3. Récepteur de diffusion numérique selon la revendication 1, dans lequel ledit processeur central effectue une série de processus d'acquisition de pièces d'informations de différence temporelle sur de multiples fréquences à partir des signaux reçus dans ladite plage de canaux prédéterminée et de stockage des pièces d'informations de différence temporelle dans ladite mémoire, et de correction d'une différence temporelle sur la base de pièces d'informations de différence temporelle qui sont incluses dans les pièces d'informations de différence temporelle sur les multiples fréquences stockées dans ladite mémoire et s'apparient mutuellement, et dont le nombre est plus grand que celui d'autres pièces d'informations de différence temporelle s'appariant mutuellement.

4. Récepteur de diffusion numérique selon la revendication 3, dans lequel lorsque dans ladite série de processus, il y a un canal pour lequel aucun signal reçu n'est reçu, ledit processeur central ajoute des informations de différence temporelle acquises le plus récemment pour ledit canal à des candidats selon la règle de la majorité.

5. Récepteur de diffusion numérique comprenant :
un récepteur pour recevoir des diffusions numériques,
un séparateur pour séparer des pièces d'informations de différence temporelle à partir de signaux reçus dudit récepteur ;
une mémoire pour stocker des pièces d'informations de différence temporelle sur de multiples fréquences de canaux reçues par ledit récepteur ; et
un processeur central pour effectuer de manière répétée une série de processus d'acquisition de pièces d'informations de différence temporelle sur de multiples fréquences provenant de signaux reçus dans une plage de canaux prédéterminée et stocker les pièces d'informations de différence temporelle dans ladite mémoire, et corriger une différence temporelle sur la base de pièces d'informations de différence temporelle qui sont incluses dans les pièces d'informations de différence temporelle sur les multiples fréquences stockées dans ladite mémoire et s'apparient mutuellement, et dont le nombre est plus grand que celui d'autres pièces quelconques d'informations de différence temporelle s'appariant mutuellement,
**caractérisé en ce que**,
lorsque dans ladite série de processus, il y a un canal pour lequel aucun signal reçu n'est reçu, ledit processeur central ajoute des informations de différence temporelle acquises le plus récemment pour ledit canal à des candidats selon la règle de la majorité.

6. Récepteur de diffusion numérique selon la revendication 5, dans lequel ledit processeur central acquiert des pièces d'informations de différence temporelle sur de multiples fréquences issues de signaux reçus dans une plage de canaux enregistrée dans un guide de programme électronique.

7. Procédé de correction de temps comprenant les étapes consistant à,
dans un récepteur, recevoir des diffusions numériques ;
dans un séparateur, séparer des pièces d'informations temporelles à partir de signaux reçus dudit récepteur ;
dans une mémoire, stocker des pièces d'information temporelle sur de multiples fréquences de canaux ; et
dans un processeur central, effectuer de manière répétée une série de processus d'acquisition de pièces d'information temporelle sur de multiples fréquences venant de signaux reçus dans une plage de canaux prédéterminée et stocker les pièces d'informations temporelles dans ladite mémoire, et corriger un temps sur la base de pièces d'informations temporelles qui sont incluses dans les pièces d'informations temporelles sur les multiples fréquences stockées dans ladite mémoire et s'apparient mutuellement, et dont le nombre est plus grand que celui d'autres pièces quelconques d'informations temporelles s'appariant mutuellement,
**caractérisé en ce que**,
lorsque dans ladite série de processus, il y a canal pour lequel aucun signal reçu n'est reçu, ledit processeur central ajoute des informations temporelles dans lesquelles une dernière correction de temps est réfléchie dans des informations temporelles acquises le plus récemment pour ledit canal à des candidats selon la règle de la majorité.

8. Procédé de correction de différences temporelles comprenant les étapes consistant à,
dans un récepteur, recevoir des diffusions numériques ;
dans un séparateur, séparer des pièces d'informations de différence temporelle à partir de signaux reçus dudit récepteur ;
dans une mémoire, stocker des pièces d'informations de différence temporelle sur de multiples fréquences de canaux ; et
dans un processeur central, effectuer de manière répétée une série de processus d'acquisition de pièces d'informations de différence temporelle sur de multiples fréquences venant de signaux reçus dans une plage de canaux prédéterminée et stocker les pièces d'informations de différence temporelle dans ladite mémoire, et corriger une différence temporelle sur la base de pièces d'informations de différence temporelle qui sont incluses dans les pièces d'informations de différence temporelle sur les multiples fréquences stockées dans ladite mémoire et s'apparient mutuellement, et dont le nombre est plus grand que celui d'autres pièces quelconques d'informations de différence temporelle s'appariant mutuellement,
**caractérisé en ce que**,
lorsque dans ladite série de processus, il y a un canal pour lequel aucun signal reçu n'est reçu, ledit processeur central ajoute des informations de différence temporelle acquises le plus récemment pour ledit canal à des candidats selon la règle de la majorité.
